# EUROPÄISCHE PATENTANMELDUNG

(11) **EP 1 046 492 A2**
(43) Veröffentlichungstag der Anmeldung: **25.10.2000**
(21) Anmeldenummer: 00108581.0
(22) Anmeldetag: 20.04.2000
(51) Int. Cl.: B32B 15/01, B32B 15/02

(54) **Verbundwerkstoff, insbesondere in Form eines Bleches, und Verfahren zu seiner Herstellung**

(30) Priorität: 23.04.1999 DE 19918485
(71) Anmelder: Harald Uhlig Stahldraht GmbH, 09648 Mittweida (DE)
(72) Erfinder: Uhlig, Harald, 09648 Mittweida (DE)
(74) Vertreter: Neumann, Steffen

(57) **Zusammenfassung**

Die Erfindung betrifft einen Verbundwerkstoff, insbesondere in Form eines Bleches, welcher aus einem Grundwerkstoff und einer Deckschicht aus einem niedrigschmelzenden Matrixmetall besteht. Außerdem betrifft die Erfindung ein Verfahren zur Herstellung eines derartigen Verbundwerkstoffs.
Gegenstand der vorliegenden Erfindung ist ein Verbundwerkstoff und ein Verfahren zu dessen Herstellung, bei dem der Verbundwerkstoff eine hohe Festigkeit bei dennoch guter plastischen Verformbarkeit aufweist, ein hohes Energieabsorptionsvermögen beinhaltet und gleichzeitig eine unproblematische Recyclbarkeit im Rahmen vorhandener Stoffkreisläufe ermöglicht sowie einfach und preiswert herstellbar ist.
Erfindungsgemäß wird dies in Verbindung mit den Merkmalen des Oberbegriffs des Patentanspruchs 1 dadurch gelöst, daß der Grundwerkstoff aus einem Drahtgewebe, Drahtgeflecht oder Drahtgestrick aus hochfesten, gezogenen Stahldrähten eines Durchmessers kleiner 2 mm und einer Zugfestigkeit größer 1500 N/mm² besteht, wobei die Zwischenräume des Drahtgewebes, Drahtgeflechts oder Drahtgestricks vollständig vom niedrigschmelzenden Matrixmetall ausgefüllt und der Grundwerkstoff insgesamt von einer Deckschicht aus dem niedrigschmelzenden Matrixmetall umschlossen ausgebildet sind.

## Beschreibung

Die Erfindung betrifft einen Verbundwerkstoff, insbesondere in Form eines Bleches, welcher aus einem Grundwerkstoff und einer Deckschicht aus einem niedrigschmelzenden Matrixmetall besteht. Außerdem betrifft die Erfindung ein Verfahren zur Herstellung eines derartigen Verbundwerkstoffs. Anwendbar ist der Verbundwerkstoff zur Herstellung von Bau- oder Strukturteilen in den verschiedensten Einsatzbereichen, insbesondere als Verstärkungselemente hochbeanspruchter Baugruppen an Fahrzeugkarosserien in der Automobilindustrie und zur Realisierung von Panzerungen (Aufprallschutz) auf technischen Gebieten, auf denen neben einer großen Festigkeit ein hohes Absorptionsvermögen kinetischer Energie im Vordergrund steht.

Aus der DE-OS 29 16 299 ist solcher Verbundwerkstoff und ein Verfahren zu dessen Herstellung bekannt. Dabei besteht der Verbundwerkstoff aus einem Grundwerkstoff, der aus einem nichtmetallischen Fasergewebe (Siliciumkarbid, Aluminiumoxid, Bor oder Kohlenstoff) gebildet und mit Lagen eines niedrigschmelzenden Matrixmetalls, insbesondere einer Aluminiumlegierung, überzogen wird. Darauf werden Decklagen (z.B. Folien aus Aluminium, Stahl, Nickel oder Titan) aufgebracht. Verfahrenstechnisch werden die derartig vorbereiteten geschichteten Lagen unter Druck einem Hartlötprozeß unterzogen, wodurch die Lagen aus dem niedrigschmelzenden Matrixmetall in das durch Webbänder gehaltene Fasergewebe diffundieren und dabei eine zusammenhängende Schicht bilden, die sich ihrerseits wiederum mit den Decklagen verbindet.
Ein solcher Verbundwerkstoff ist zwar vorteilhaft für hohe mechanische und thermische Belastungen unter speziellen Beanspruchungsbedingungen anwendbar, weist aber auch einige entscheidende Nachteile auf. So ist dessen Herstellung arbeits- und anlagenintensiv sowie der verwendete Grundwerkstoff verhältnismäßig teuer. Probleme bereitet außerdem die Recyclbarkeit, welche in der Kombination von nichtmetallischen mit metallischen Werkstoffe begründet ist, und eine Wiederverwendung im Rahmen der vorhandenen Stoffkreisläufe nahezu unmöglich macht.

Gegenstand der vorliegenden Erfindung ist ein Verbundwerkstoff und ein Verfahren zu dessen Herstellung, bei dem der Verbundwerkstoff eine hohe Festigkeit bei dennoch guter plastischen Verformbarkeit aufweist, ein hohes Energieabsorptionsvermögen beinhaltet und gleichzeitig eine unproblematische Recyclbarkeit im Rahmen vorhandener Stoffkreisläufe ermöglicht sowie einfach und preiswert herstellbar ist.

Erfindungsgemäß wird dies in Verbindung mit den Merkmalen des Oberbegriffs des Patentanspruchs 1 dadurch gelöst, daß der Grundwerkstoff aus einem Drahtgewebe, Drahtgeflecht oder Drahtgestrick aus hochfesten, gezogenen Stahldrähten eines Durchmessers kleiner 2 mm und einer Zugfestigkeit größer 1500 N/mm² besteht, wobei die Zwischenräume des Drahtgewebes, Drahtgeflechts oder Drahtgestricks vollständig vom niedrigschmelzenden Matrixmetall ausgefüllt und der Grundwerkstoff insgesamt von einer Deckschicht aus dem niedrigschmelzenden Matrixmetall umschlossen ausgebildet sind.

Die Vorteile der Erfindung bestehen darin, daß ein sich gegenseitig stützender Verband von allein metallischen Werkstoffen es ermöglicht, einen preiswerten Verbundwerkstoff mit einer großen Festigkeit bei dennoch guter plastischen Verformbarkeit bereitzustellen, der ein hohes Energieabsorptionsvermögen beinhaltet und gleichzeitig eine unproblematische Recyclbarkeit im Rahmen vorhandener Stoffkreisläufe ermöglicht sowie wenig anlagenintensiv und damit einfach und kostengünstig herstellbar ist.

Vorteilhafte Ausgestaltungen der Erfindung gehen aus den Patentansprüchen 2 bis 6 hervor.

Dabei wird durch die Weiterbildung der Erfindung nach Patentanspruch 2 erreicht, daß eine innige und damit feste Verbindung zwischen den Stahldrähten als Festigkeitsträger und dem Matrixmetall hergestellt werden kann.

Die Fortbildung der Erfindung gemäß Patentanspruch 3 sichert ab, daß ein Matrixmetall eingesetzt werden kann, welches es durch einen niedrigen Schmelzpunkt erlaubt, daß Drahtgewebe, Drahtgeflecht oder Drahtgestrick aus hochfesten, gezogenen Stahldrähten in das schmelzflüssige Matrixmetall zu tauchen, ohne daß negative Veränderungen der mechanischen Kennwerte der Stahldrähte eintreten. Außerdem werden durch das Matrixmetall alle Zwischenräume des Drahtgewebes, Drahtgeflechts oder Drahtgestricks vollständig ausgefüllt, wobei gleichzeitig eine feste Verbindung zwischen Matrixmetall und der mit dem gleichen Metall beschichteten Stahldrahtoberfläche hergestellt wird.

Während es die gemäß Patentanspruch 4 erfolgende Ausgestaltung der Erfindung ermöglicht, daß durch die Kombination mehrerer Verbundbleche Verbundstrukturen aufgebaut werden können, die den unterschiedlichsten Beanspruchungsbedingungen anpaßbar sind, wird durch die Weiterbildungen nach den Patentansprüchen 5 und 6 eine Kombination eines oder mehrerer Verbundbleche mit einem oder mehreren Stahlblechen oder verzinkten Stahlblechen geschaffen, um Stahlblechkonstruktionen an Bereichen mit kritischen Beanspruchungen noch weiter zu verstärken (z.B. charakteristische Aufprallzonen an Fahrzeugkarosserien).

Das Verfahren zur Herstellung des erfindungsgemäßen Verbundwerkstoffes widerspiegelt sich aus den Patentansprüchen 7 bis 10.

Die Erfindung soll nachfolgend an einem Ausführungsbeispiel mit zugehörigen Zeichnungen näher erläutert werden.

Es zeigen:
- Fig. 1: eine Schnittdarstellung des erfindungsgemäßen Verbundwerkstoffes in Form eines Verbundbleches nach dem Kaltwalzen auf das Dickenmaß D₂
- Fig. 2: eine Darstellung eines Drahtgewebes in Form einer glatten Tresse
- Fig. 3: eine Darstellung eines Drahtgewebes in Form einer Panzertresse
- Fig. 4: eine Darstellung eines Drahtgewebes in Form einer Köpertresse
- Fig. 5: eine Schnittdarstellung des erfindungsgemäßen Verbundwerkstoffes in Form eines Verbundbleches nach dem Tauchen und mit dem Dickenmaß D₁
- Fig. 6: eine Schnittdarstellung des erfindungsgemäßen Verbundwerkstoffes in Form eines Mehrfach-Verbundbleches nach dem Kaltwalzen
- Fig. 7: eine Schnittdarstellung des erfindungsgemäßen Verbundwerkstoffes in Form eines Verbundbleches mit beidseitig vorgesehenen verzinkten Stahlblechen nach dem Kaltwalzen

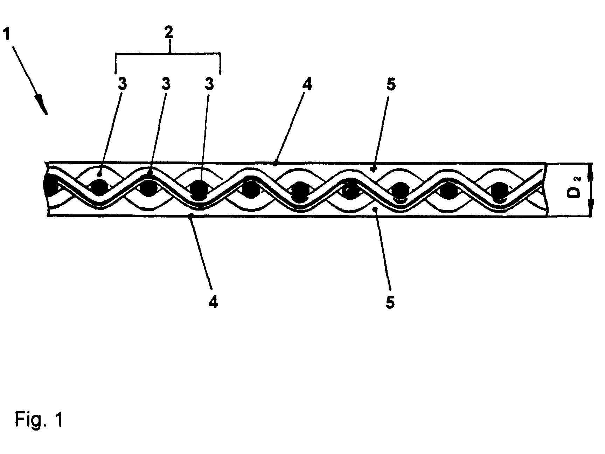

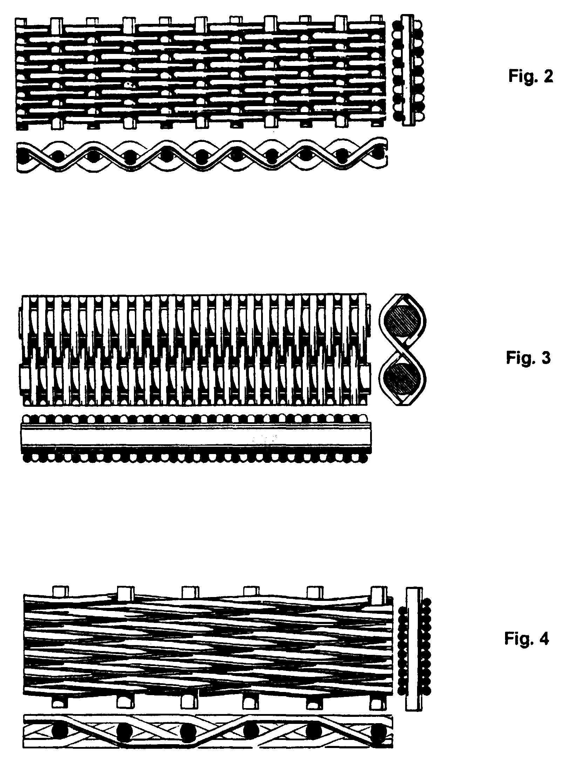

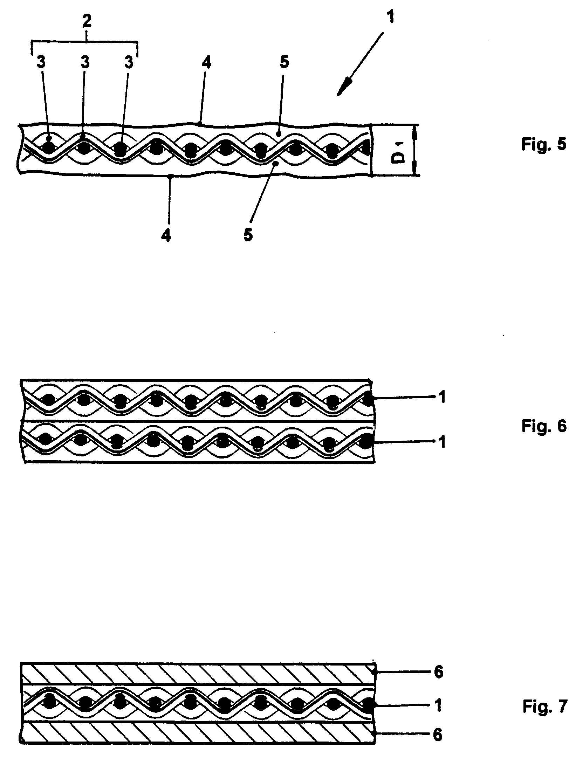

Der in Fig. 1 dargestellte Verbundwerkstoff 1 in Form eines Bleches besteht aus einem Grundwerkstoff, welcher aus einem Drahtgewebe 2 oder auch einem Drahtgeflecht bzw. Drahtgestrick aus hochfesten, verzinkt gezogenen Stahldrähten 3 eines Durchmessers von zum Beispiel 0,2 mm und einer Zugfestigkeit von 2.600 bis 2.800 N/mm² gebildet wird. Beispiele für verschiedenartige Arten des Drahtgewebes 2 sind in den Fig. 2 bis 4 wiedergegeben. Das Drahtgewebe 2 ist insgesamt mit einer Deckschicht 4 aus einem niedrigschmelzenden Matrixmetall, vorzugsweise Zink oder einer Zinklegierung, umschlossen, wodurch gleichzeitig auch die Zwischenräume 5 des Drahtgewebes 2 mit diesem niedrigschmelzenden Matrixmetall ausgefüllt werden. Der so aufgebaute Verbundwerkstoff 1 in Blechform weist ein Dickenmaß D₂ auf, welches ausgehend von einem nach dem Tauchen (unten näher beschriebenen) realisierten Dickenmaß D₁ (siehe Fig. 5), durch einen Walzvorgang erzielt wird, wobei D₂ < D₁ ausgebildet ist.

Weiterhin besteht die aus Fig. 6 ersichtliche Möglichkeit zwei oder auch mehr der vom Matrixmetall ausgefüllten bzw. umschlossenen Drahtgewebe 2, Drahtgeflechte und/oder Drahtgestricke (= blechförmiger Verbundwerkstoff 1) miteinander zu verbinden, was wiederum durch Walzen erreicht wird.

Letztlich ist es vorgesehen, daß ein oder mehrere der vom Matrixmetall ausgefüllten bzw. umschlossenen Drahtgewebe 2, Drahtgeflechte und/oder Drahtgestricke (= blechförmiger Verbundwerkstoff 1) ein- oder beidseitig (siehe Fig. 7) mit einem vorteilhafterweise verzinkten Stahlblech 6 ausgestattet sind, was wiederum durch einen Walzvorgang erfolgt.

Das erfindungsgemäße Verfahren zur Herstellung des Verbundwerkstoffes 1 ist durch die Abfolge nachfolgenden Verfahrensschritte charakterisiert:
a) aus hochfesten, verzinkt gezogenen Stahldrähten 3 wird ein Drahtgewebe 2, Drahtgeflecht oder Drahtgestrick als Grundwerkstoff hergestellt,
b) dieser Grundwerkstoff wird nach Reinigung und Flußmittelauftrag in ein Schmelzbad einer Temperatur von 435 bis 470 °C und einer Verweilzeit von 1 bis 10 s zum Aufbringen einer Deckschicht 4 aus einem niedrigschmelzenden Matrixmetall (Zink) getaucht, was in einer kontinuierlich arbeitenden Durchlaufanlage erfolgen kann, nachfolgend senkrecht aus dem Schmelzbad gezogen und das überschüssige Zink abgestriffen oder abgeblasen,
c) der so entstandene Verbundwerkstoff 1 wird einem Kühlungsprozeß unterworfen und
d) abschließend ausgehend von dem nach dem Tauchen existenten Dickenmaß D₁ (Fig. 5) einem Kaltwalzvorgang zur Realisierung eines vorgegebenen Dickenmaßes D₂ (Fig. 1) unterzogen.

Durch die beim Verzinken realisierte Temperatureinwirkung von ca. 435 bis 470 °C vollziehen sich bei den hochfesten Stahldrähten 3 des Gewebes 2 Erholungsvorgänge dahingehend, daß ein geringfügiger Festigkeitsabbau und eine Zunahme der Bruchdehnung erfolgen. Die Kaltverformung durch das Walzen führt zu einer Erhöhung der Zugfestigkeit des Matrixmetalls Zink. Dabei wird der Verformungsgrad beim Walzen so gewählt, daß eine Schädigung des Drahtgewebes 2 vermieden werden kann.

Weiterhin besteht die Möglichkeit, daß mindestens zwei (siehe Fig. 6) der von einem niedrigschmelzenden Matrixmetall (z.B. Zink) ausgefüllten bzw. umschlossenen Drahtgewebe 2, Drahtgeflechte und/oder Drahtgestricke (= blechförmiger Verbundwerkstoff 1) durch Walzen miteinander verbunden werden, so daß ein Mehrfach-Verbundblech entsteht.

Darüber hinaus ist auch die Möglichkeit gegeben, daß ein (siehe Fig. 7) oder mehrere der von einem niedrigschmelzenden Matrixmetall (z.B. Zink) ausgefüllten bzw. umschlossenen Drahtgewebe 2, Drahtgeflechte und/oder Drahtgestricke (= blechförmiger Verbundwerkstoff 1) durch Walzen ein- oder beidseitig mit einem Stahlblech 6 (siehe Fig. 7) verbunden werden.

### Bezugszeichenliste

- 1: Verbundwerkstoff
- 2: Drahtgewebe (Drahtgeflecht, Drahtgestrick)
- 3: Stahldraht
- 4: Deckschicht
- 5: Zwischenräume
- 6: Stahlblech
- D₁: Dickenmaß nach dem Tauchen
- D₂: Dickenmaß nach dem Kaltwalzen

## Patentansprüche

1. Verbundwerkstoff, insbesondere in Form eines Bleches, welcher aus einem Grundwerkstoff und einer Deckschicht aus einem niedrigschmelzenden Matrixmetall besteht,
dadurch gekennzeichnet,
daß der Grundwerkstoff aus einem Drahtgewebe (2), Drahtgeflecht oder Drahtgestrick aus hochtesten, gezogenen Stahldrähten (3) eines Durchmessers kleiner 2 mm und einer Zugfestigkeit größer 1500 N/mm² besteht, wobei die Zwischenräume (5) des Drahtgewebes (2), Drahtgeflechts oder Drahtgestricks vollständig vom niedrigschmelzenden Matrixmetall ausgefüllt und der Grundwerkstoff insgesamt von einer Deckschicht (4) aus dem niedrigschmelzenden Matrixmetall umschlossen ausgebildet sind.

2. Verbundwerkstoff, insbesondere in Form eines Bleches, nach Anspruch 1,
dadurch gekennzeichnet,
daß die Stahldrähte (3) eine verzinkte Oberfläche aufweisen.

3. Verbundwerkstoff, insbesondere in Form eines Bleches, nach Anspruch 1,
dadurch gekennzeichnet,
daß die Deckschicht (4) aus dem niedrigschmelzenden Matrixmetall aus Zink oder einer Zinklegierung besteht.

4. Verbundwerkstoff, insbesondere in Form eines Bleches, nach Anspruch 1,
dadurch gekennzeichnet,
daß mindestens zwei der von einem niedrigschmelzenden Matrixmetall ausgefüllten bzw. umschlossenen Drahtgewebe (2), Drahtgeflechte und/oder Drahtgestricke miteinander verbunden sind.

5. Verbundwerkstoff, insbesondere in Form eines Bleches, nach Anspruch 1 oder 4,
dadurch gekennzeichnet,
daß ein oder mehrere der von einem niedrigschmelzenden Matrixmetall ausgefüllten bzw. umschlossenen Drahtgewebe (2), Drahtgeflechte und/oder Drahtgestricke ein- oder beidseitig mit einem Stahlblech (6) ausgestattet sind.

6. Verbundwerkstoff, insbesondere in Form eines Bleches, nach Anspruch 5,
dadurch gekennzeichnet,
daß das Stahlblech (6) als ein verzinktes Stahlblech (6) ausgebildet ist.

7. Verfahren zur Herstellung eines Verbundwerkstoffs nach Anspruch 1,
gekennzeichnet durch die nachfolgenden Verfahrensschritte
a) aus hochfesten, gezogenen Stahldrähten (3) wird ein Drahtgewebe (2), Drahtgeflecht oder Drahtgestrick als Grundwerkstoff hergestellt,
b) dieser Grundwerkstoff wird nach Reinigung und Flußmittelauftrag zum Aufbringen einer Deckschicht (4) in ein Schmelzbad eines niedrigschmelzenden Matrixmetalls getaucht, nachfolgend senkrecht aus dem Schmelzbad gezogen und das überschüssige niedrigschmelzende Matrixmetall abgestriffen oder abgeblasen,
c) der so entstandene Verbundwerkstoff (1) wird einem Kühlungsprozeß unterworfen und
d) abschließend einem Kaltwalzvorgang zur Realisierung eines vorgegebenen Dickenmaßes (D₂) unterzogen.

8. Verfahren zur Herstellung eines Verbundwerkstoffs nach Anspruch 7,
dadurch gekennzeichnet,
daß mindestens zwei der von einem niedrigschmelzenden Matrixmetall ausgefüllten bzw. umschlossenen Drahtgewebe (2), Drahtgeflechte und/oder Drahtgestricke durch Walzen miteinander verbunden werden.

9. Verfahren zur Herstellung eines Verbundwerkstoffs nach Anspruch 7 oder 8,
dadurch gekennzeichnet,
daß ein oder mehrere der von einem niedrigschmelzenden Matrixmetall ausgefüllten bzw. umschlossenen Drahtgewebe (2), Drahtgeflechte und/oder Drahtgestricke ein- oder beidseitig durch Walzen mit einem Stahlblech (6) verbunden werden.

10. Verfahren zur Herstellung eines Verbundwerkstoffs nach Anspruch
dadurch gekennzeichnet,
daß als niedrigschmelzendes Matrixmetall Zink verwendet wird.
